(19) Europäisches Patentamt
European Patent Office
Office européen des brevets

(11) Veröffentlichungsnummer: **0 206 987**
**A1**

# (12) EUROPÄISCHE PATENTANMELDUNG

(21) Anmeldenummer: **86810236.9**

(22) Anmeldetag: **02.06.86**

(51) Int. Cl.⁴: **A 01 N 25/02**

(30) Priorität: **07.06.85 CH 2406/85**

(43) Veröffentlichungstag der Anmeldung: **30.12.86 Patentblatt 86/52**

(84) Benannte Vertragsstaaten: **AT BE CH DE FR GB IT LI NL**

(71) Anmelder: **CIBA-GEIGY AG, Klybeckstrasse 141, CH-4002 Basel (CH)**

(72) Erfinder: **Somlo, Josef, Im Niederholzboden 50, CH-4125 Riehen (CH)**
Erfinder: **Besse, Jean Jacques, Dr., Clos Louis, CH-3961 Miège (CH)**

## (54) Herbizide Zusammensetzungen.

(57) Es werden herbizide Zusammensetzungen zur Bekämpfung von Unkräutern in verpflanztem und nass gesätem Reis beschrieben, die als emulgierbare Konzentrate formuliert sind und die neben einer oder mehreren Aktivsubstanzen Lösungsmittel und oberflächenaktiven Mitteln einen Alkohol der Formel

$$R-OH$$

worin R $C_2-C_8$-Alkyl, $C_5-C_7$-Cycloalkyl, Cyclopropylmethyl, 1-Cyclopropyläthyl, Cyclohexylmethyl, 1-Cyclohexyläthyl, 2-Cyclohexyläthyl, Benzyl oder 1- oder 2-Phenyläthyl bedeutet, enthalten.

EP 0 206 987 A1

CIBA-GEIGY AG
Basel (Schweiz)

5-15379/=

## Herbizide Zusammensetzungen

Die vorliegende Erfindung betrifft herbizide Zusammensetzungen zur Bekämpfung von Unkräutern in verpflanztem und in nass gesätem Reis in Form von emulgierbaren Konzentraten.

Es ist bekannt, herbizide Aktivsubstanzen als emulgierbare Konzentrate zu formulieren. Solche emulgierbare Konzentrate enthalten in der Regel neben der herbiziden Aktivsubstanz ein mit Wasser nicht mischbares Lösungsmittel, geeignete oberflächenaktive Mittel, vorzugsweise eine Mischung eines anionischen und eines nichtionischen Tensids. Dabei sind die einzelnen Komponenten so aufeinander abgestimmt, dass das Konzentrat beim Vermischen mit Wasser eine zumindest für die Dauer der nachfolgenden Applikation stabile Emulsion ergibt.

Es ist auch bekannt, emulgierbare Konzentrate dieser Art zur Unkrautbekämpfung in Kulturen von verpflanztem und nass gesätem Reis zu verwenden. Dabei wird das unverdünnte Konzentrat direkt auf die Wasseroberfläche ausgebracht. Bei dieser Art der Anwendung bewirken die in der Formulierung enthaltenen oberflächenaktiven Mittel zunächst die Bildung eines Films auf der Wasseroberfläche, aus welchem die Aktivsubstanz zu Boden sinkt, wo sie ihre herbizide Wirkung im Wurzelbereich entfaltet.

Die Applikation der emulgierbaren Konzentrate kann in der Weise erfolgen, dass man das Konzentrat mit einer üblichen Sprühvorrichtung über die Wasseroberfläche verteilt. Eine weitere besonders einfache Art der Applikation stellt die sogenannte "Shaker Bottle Applikation" dar. Bei dieser Art der Applikation wird eine mit einer perforierten Kappe versehene Flasche, in der sich das emulgierbare Konzentrat befindet, von der applizierenden Person in einer kombinierten Wurf- und Schüttelbewegung vor dem Körper hin und her geschwungen. Dadurch werden Tropfen des Konzentrates durch die Oeffnungen in der Kappe der Flasche herausgeschleudert und über die Wasseroberfläche verteilt. Emulgierbare Konzentrate, die in dieser Weise angewendet werden können, sind beispielsweise in der britischen Patentschrift 1 598 327 und in der japanischen Patentpublikation Sho 56-26641 beschrieben.

Aus der deutschen Offenlegungsschrift 3 247 050 sind ferner herbizide Formulierungen bekannt, die zur Verbesserung der herbiziden Wirkung neben der herbiziden Aktivsubstanz einen weit über dem üblichen Gehalt liegende Menge eines Spreitmittels enthalten. Als solche Spreitmittel werden u.a. Fettalkohole, wie Isotridecylalkohol, 2-Octyldodecanol, Cetylstearylalkohol und Oleylalkohol genannt.

Es wurde nun gefunden, dass die herbizide Wirkung von emulgierbaren Konzentraten, die zur Bekämpfung von Unkräutern in Kulturen von verpflanztem oder von nass gesätem Reis verwendet werden können, überraschenderweise gesteigert wird, wenn die Konzentrate neben den für ein emulgierbares Konzentrat üblichen Bestandteilen einen oder mehrere Alkohole enthalten.

Gegenstand der vorliegenden Erfindung ist daher eine herbizide Zusammensetzung zur Bekämpfung von Unkräutern in Kulturen von verpflanztem oder nass gesätem Reis in Form eines emulgierbaren Konzentrats, das dadurch gekennzeichnet ist, dass es neben einer oder mehreren herbiziden Aktivsubstanzen, anionischen und nichtionischen Tensiden und einem mit Wasser nicht mischbaren Lösungsmittel einen oder mehrere Alkohole der Formel I

R-OH (I)

worin R $C_2$-$C_8$-Alkyl, $C_5$-$C_7$-Cycloalkyl, Cyclopropylmethyl, 1-Cyclopropyläthyl, Cyclohexylmethyl, 1-Cyclohexyläthyl, 2-Cyclohexyläthyl, Benzyl und 1- oder 2-Phenyläthyl bedeutet, enthält.

Der Gehalt der erfindungsgemässen emulgierbaren Konzentrate an einem Alkohol der Formel I kann je nach Art und Konzentration der Aktivsubstanz zwischen 2,5 und 25 Gew.% variieren. Vorzugsweise beträgt der Alkoholgehalt der erfindungsgemässen emulgierbaren Konzentrate 3 - 10 Gew.% und besonders bevorzugt 5 - 10 Gew.%. Typische erfindungsgemässe emulgierbare Konzentrate enthalten:

10 - 50 Gew.% Aktivsubstanz
3 - 20 Gew.% eines oder mehrerer Alkohole der Formel I
0.3 - 10 Gew.% Tensid bzw. Tensid-Gemisch
ad 100 Gew.% Lösungsmittel

Das Mengenverhältnis von Aktivsubstanz zu Alkohol der Formel I beträgt in der Regel 1-20 : 1, vorzugsweise etwa 1 - 5 : 1.

Der Rest R umfasst als $C_2$-$C_8$-Alkyl geradkettige oder verzweigte Alkylgruppen. Als Beispiele für die Bedeutung von R als $C_2$-$C_8$-Alkyl seien Aethyl, n-Propyl, Isopropyl, n-Butyl, sek.-Butyl, tert.-Butyl, iso-Butyl, n-Pentyl, 1-Methylbutyl, 2-Methylbutyl, 3-Methylbutyl, 2,2-Dimethylpropyl, n-Hexyl, 2-Methylpentyl, 3-Methylpentyl, 4-Methylpentyl, 2,2-Dimethylbutyl, n-Heptyl, n-Octyl und Isooctyl, genannt. Bevorzugte Alkylreste R sind $C_4$-$C_6$-Alkylreste.

Als $C_5$-$C_7$-Cycloalkyl umfasst R Cyclopentyl, Cyclohexyl und Cycloheptyl. Diese Gruppen können durch 1 - 2 Methylgruppen und/oder durch eine Hydroxygruppe substituiert sein.

Neben den vorgenannten unsubstituierten Phenylalkylgruppen, Benzyl und 1- oder 2-Phenyläthyl umfasst R auch die entsprechenden, im Phenylrest durch übliche Substituenten, wie Halogen, Nitro, Niederalkyl und Niederalkoxy substituierten Gruppen.

Bevorzugte Alkohole sind n-Butanol, Isobutanol, Amylalkohol (n-Pentanol), Isoamylalkohol, n-Hexanol, Cyclohexanol und Benzylalkohol.

Als Herbizide kommen solche in Betracht, die üblicherweise in Reiskulturen verwendet werden. Als Beispiele für solche Herbizide seien genannt:

Thiolcarbamate, wie S-(4-Chlorbenzyl)-diethylthiocarbamat (Thiobencarb; Jpn. Pestic. Inf., 1970, Nr. 2, Seite 29), Phenoxyesssigsäurederivate, wie 2,4-Dichlorphenoxyessigsäure (2,4-D, vgl. GB-PS 573 476) ihre Ester und Salze, Diphenyläther, wie 5-(2,4-Dichlorphenoxy)-2-nitrobenzoesäuremethylester (Bifenox, GB-PS 1,252,368), 4-Nitro-2',4',6'-trichlordiphenyläther (Chlornitrofen) und 2,4-Dichlor-3'-methoxy-4'-nitrodiphenyläther (Chlormethoxynil), Benzoylpyrazolderivate, wie 4-(2,4-Dichlorbenzoyl)-1,3-dimethylpyrazol-5-yl-p-toluolsulfonat (Pyrazolate) und 2-[4-(2,4-Dichlorbenzoyl)-1,3-dimethylpyrazol-5-yloxy]acetophenon (Pyrazoxyfen), Halogenacetanilide, wie N-Butoxymethyl-N-chloracetyl-2,6-diäthylanilin (Butachlor; US-PS 3 442 945), N-(2-Propoxyäthyl)-N-chloracetyl-2,6-diäthylanilin (Pretilachlor; GB-PS 1 438 311) und N-(2-Methoxy-1-methyläthyl)-N-chloracetyl-2-äthyl-6-methylanilin (Metolachlor; GB-PS 1 438 311), 1,3,5-Triazinderivate, wie 2-(1,2-Dimethylpropylamino)-4-äthylamino-6-methylthio-1,3,5-triazin (Dimethametryn; GB-PS 1 191 585), Oxadiazolderivate, wie 5-Tertiärbutyl-3-(2,4-dichlor-5-isopropoxyphenyl)-1,3,4-oxadiazol-2-(3H)-on (Oxadiazon; GB-PS 1 110 500), O,O-Dialkyl-S-piperidinocarbonylmethylthiophosphate, wie O,O-Dipropyl-S-(2-methylpiperidinocarbonylmethyl)-thiophosphat (Piperophos; GB-PS 1 255 946), sowie Gemische von Piperophos mit 2,4-D (Rilof H), Pretilachlor, Oxadiazon oder Dimethametryn.

Vorzugsweise enthalten die erfindungsgemässen emulgierbaren Konzentrate als herbiziden Wirkstoff Pretilachlor, Oxadiazon, oder Gemische von Piperophos mit 2,4-D oder Dimethametryn oder Gemische von Pretilachlor mit Oxadiazon.

Als oberflächenaktive Mittel, die in den erfindungsgemässen emulgierbaren Konzentraten enthalten sein können, kommen die anionischen und nichtionischen Tenside, wie sie bei der Formulierung von emulgierbaren Konzentraten üblicherweise verwendetet werden, in Betracht. Vorzugsweise enthalten die erfindungsgemässen emulgierbaren Konzentrate ein Tensidgemisch bestehend aus einem anionischen und einem nichtionischen Tensid.

Als geeignete anionische Tenside kommen insbesondere Alkylarylsulfonate der Formel II

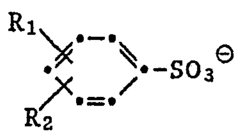 $B^{\oplus}$ (II)

in welcher $R_1$ $C_1$-$C_{12}$-Alkyl, $R_2$ Wasserstoff oder $C_1$-$C_{12}$-Alkyl und B ein Alkalimetall-, Erdalkalimetall- oder Ammoniumkation oder das Kation eines primären, sekundären oder tertiären Amins bedeutet, in Betracht. In der obigen Formel II bedeutet B insbesondere ein Natrium-, Kalium-, Calcium-, Ammonium-, Triäthylammonium-, Triäthanolammonium-, Isopropylammonium- oder Cyclohexylammoniumion. Als besonders geeignetes Alkarylsulfonat der Formel II hat sich Calciumdodecylbenzolsulfonat erwiesen.

Ferner sind als anionische Tenside Mono- und Di-(phenolpolyglykoläther)-phosphorsäureester und deren Salze der Formel III

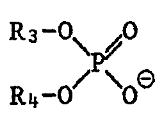 $M^{\oplus}$ (III)

in welcher $R_3$ einen Rest der Formel

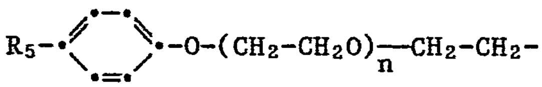

bedeutet, $R_4$ die gleiche Bedeutung hat wie $R_3$ oder für Wasserstoff steht und $M^{\oplus}$ ein Proton, ein Natrium-, Kalium-, Diäthylammonium-, Triäthylammonium-, Diäthanolammonium- oder Triäthanolammoniumkation bedeutet, wobei $R_5$ für $C_5$-$C_{12}$-Alkyl und n für 4 - 15 steht. Bevorzugt sind solche Mono- und Di-(phenolpolyglykoläther)-phosphorsäureester oder ihre Salze der Formel III, in welchem $R_5$ ein $C_8$-$C_{10}$-Alkylrest, insbesondere der Nonylrest, ist und n 5 - 9 bedeutet, geeignet.

Geeignete nichtionische Tenside sind Mono-, Di- und Triglyceridpolyglykoläther der Formel IV

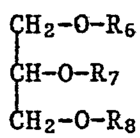

(IV)

in welcher $R_6$, $R_7$ und $R_8$ je unabhängig voneinander einen Polyglykolätherrest oder den Rest der Ricinolsäure (12-Hydroxy-9-octadecensäure) bedeuten, der an der Hydroxygruppe ebenfalls durch einen Polyglykolätherrest substituiert sein kann, wobei stets mindestens einer der Reste $R_6$, $R_7$ und $R_8$ den Rest der Ricinolsäure bedeutet und die Zahl der insgesamt vorhandenen Aethylenoxideinheiten 2 - 40, vorzugsweise 30 - 40, beträgt. Ein bevorzugter Vertreter der nichtionischen Tenside der Formel IV ist äthoxyliertes Ricinusöl.

Ferner sind als nichtionische Tenside Aralkylphenolpolyglykoläther der Formel V

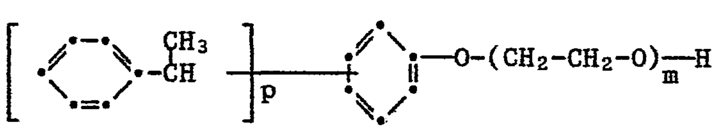

(V)

in welcher m 2 - 25 und p 1 - 3 bedeutet, geeignet. Bevorzugt sind solche Aralkylphenolpolyglykoläther der Formel (V), in welchem m 20 - 25 und p 3 bedeutet.

Weiterhin kommen als nichtionische Tenside Fettalkoholpolyglykoläther der Formel VI

$$R_{10}-O-(CH_2-CH_2-O)_q-H \qquad (VI)$$

in welcher $R_{10}$ $C_{10}$-$C_{20}$-Alkyl oder $C_{16}$-$C_{20}$-Alkenyl und q 2 - 20 bedeutet, in Betracht. Bevorzugte Reste $R_{10}$ sind Lauryl, Cetyl Stearyl und insbesondere Oleyl. Die bevorzugte Bedeutung von q ist 14 - 16.

Als Lösungsmittel können generell inerte, mit Wasser nicht mischbare organische Lösungsmittel verwendet werden. Insbesondere sind aromatische und aliphatische Kohlenwasserstoffe, wie Benzol, Toluol, Xylole, Chlorbenzol, n-Hexan, n-Heptan und Cyclohexan geeignet. Ferner eignen sich aliphatische und aromatische Benzinfraktionen, sowie cycloaliphatische Ketone, wie Cyclohexanon und Cycloheptanon. Zu vielen Fällen können vorteilhaft auch Gemische der vorgenannten Lösungsmitttel verwendet werden.

Die erfindungsgemässen emulgierbaren Konzentrate können hergestellt werden, indem man die erforderliche Menge Lösungsmittel vorlegt, die Aktivsubstanz, die Tenside und den Alkohol einträgt und die Mischung bei Normaltemperatur oder leicht erhöhter Temperatur, beispielsweise bei 30 - 50°C, bis zur Homogenität rührt. Man erhält so unmittelbar gebrauchsfertige Konzentrate, die entweder direkt (z.B. Shaker Bottle Applikation) oder nach Verdünnen mit Wasser appliziert werden können.

In den nachfolgenden Beispielen werden zur Erläuterung der vorliegenden Erfindung einige typische herbizide Zusammensetzungen und ihre vorteilhafte biologische Wirkung angegeben. Die Herstellung dieser herbiziden Zusammensetzungen kann nach der oben angegebenen Methode erfolgen.

Beispiel 1:

20 Gew.% Piperophos
5 Gew.% Dimethametryn
5 Gew.% Pentanol-1
1,5 Gew.% Dodecylbenzolsulfonsäure-Calcium
1,5 Gew.% Ricinusölpolyglykoläther (36-37 EO)
ad 100 Gew.% Xylol.

Beispiel 2:

20 Gew.% Piperophos
5 Gew.% Dimethametryn
10 Gew.% Cyclohexanol
1,5 Gew.% Dodecylbenzolsulfonsäure-Calcium
1,5 Gew.% Ricinusölpolyglykoläther (36-37 EO)
ad 100 Gew.% Toluol

Beispiel 3:

20 Gew.% Piperophos
5 Gew.% Dimethametryn
10 Gew.% Isobutanol
1,5 Gew.% Dodecylbenzolsulfonsäure-Calcium
1,5 Gew.% Ricinusölpolyglykoläther (36-37 EO)
ad 100 Gew.% Xylol

Beispiel 4:

20 Gew.% Piperophos
5 Gew.% Dimethametryn
5 Gew.% Octanol-1
1,5 Gew.% Dodecylbenzolsulfonsäure-Calcium
1,5 Gew.% Ricinusölpolyglykoläther (36-37 EO)
ad 100 Gew.% Xylol

Beispiel 5:

20 Gew.% Piperophos
5 Gew.% Dimethametryn
5 Gew.% Benzylalkohol
1,5 Gew.% Dodecylbenzolsulfonsäure-Calcium
1,5 Gew.% Ricinusölpolyglykoläther (36-37 EO)
ad 100 Gew.% Xylol

Beispiel 6:

20 Gew.% Piperophos
5 Gew.% Dimethametryn
10 Gew.% Isopropanol
1,5 Gew.% Dodecylbenzolsulfonsäure-Calcium
1,5 Gew.% Ricinusölpolyglykoläther (36-37 EO)
ad 100 Gew.% Toluol

Beispiel 7:

12,7 Gew.% Piperophos
6 Gew.% 2,4-D(in Form von 2,4-D-Butylester)
10 Gew.% Pentanol-1
0,6 Gew.% Oleylpolyglykoläther (15 EO)
0,9 Gew.% Ricinusölpolyglykoläther (36-37 EO)
1,5 Gew.% Dodecylbenzolsulfonsäure-Calcium
ad 100 Gew.% Xylol

Beispiel 8:

17,0 Gew.% Piperophos
8,0 Gew.% 2,4-D(in Form von 2,4-D-Butylester)
10,0 Gew.% Pentanol-1
0,6 Gew.% Oleylpolyglykoläther (15 EO)
0,9 Gew.% Ricinusölpolyglykoläther (36-37 EO)
1,5 Gew.% Dodecylbenzolsulfonsäure-Calcium
ad 100 Gew.% Cyclohexanon

Beispiel 9:

17,0 Gew.% Piperophos
8,0 Gew.% 2,4-D(in Form von 2,4-D-Butylester)
5,0 Gew.% Isobutanol
0,6 Gew.% Oleylpolyglykoläther (15 EO)
0,9 Gew.% Ricinusölpolyglykoläther (36-37 EO)
1,5 Gew.% Dodecylbenzolsulfonsäure-Calcium
ad 100 Gew.% Cyclohexanon

Beispiel 10:

12,7 Gew.% Piperophos
6,0 Gew.% 2,4-D(in Form von 2,4-D-Butylester)
5,0 Gew.% Cyclohexanol
0,6 Gew.% Oleylpolyglykoläther (15 EO)
0,9 Gew.% Ricinusölpolyglykoläther (36-37 EO)
1,5 Gew.% Dodecylbenzolsulfonsäure-Calcium
ad 100 Gew.% Toluol

Beispiel 11:

17,0 Gew.% Piperophos
8,0 Gew.% 2,4-D(in Form von 2,4-D-Butylester)
5,0 Gew.% Benzylalkohol
0,6 Gew.% Oleylpolyglykoläther (15 EO)
0,9 Gew.% Ricinusölpolyglykoläther (36-37 EO)
1,5 Gew.% Dodecylbenzolsulfonsäure-Calcium
ad 100 Gew.% Cyclohexanon

Beispiel 12:

12,7 Gew.% Piperophos
6,0 Gew.% 2,4-D(in Form von 2,4-D-Butylester)
10,0 Gew.% Octanol-1
0,6 Gew.% Oleylpolyglykoläther (15 EO)
0,9 Gew.% Ricinusölpolyglykoläther (36-37 EO)
1,5 Gew.% Dodecylbenzolsulfonsäure-Calcium
ad 100 Gew.% Xylol

Beispiel 13:

12,0 Gew.% Pretilachlor
10,0 Gew.% Pentanol-1
0,6 Gew.% Oleylpolyglykoläther (15 EO)
0,8 Gew.% Ricinusölpolyglykoläther (36-37 EO)
1,4 Gew.% Dodecylbenzolsulfonsäure-Calcium
ad 100 Gew.% Xylol

Beispiel 14:

8,0 Gew.% Pretilachlor
8,0 Gew.% Oxadiazon
10,0 Gew.% Pentanol-1
0,3 Gew.% Oleylpolyglykoläther (15 EO)
0,4 Gew.% Ricinusölpolyglykoläther (36-37 EO)
0,7 Gew.% Dodecylbenzolsulfonsäure-Calciumsalz
ad 100 Gew.% Xylol

Beispiel 15:

12,0 Gew.% Pretilachlor
10,0 Gew.% Pentanol-1
0,9 Gew.% Oleylpolyglykoläther (15 EO)
1,2 Gew.% Ricinusölpolyglykoläther (36-37 EO)
2,1 Gew.% Dodecylbenzolsulfonsäure-Calciumsalz
ad 100 Gew.% Toluol

Nachfolgend werden einige Versuche beschrieben, aus denen die überlegene Wirkung der erfindungsgemässen einen Alkohol der Formel I enthaltenden Formulierungen gegenüber entsprechenden Formulierungen, die keinen Alkohol enthalten, hervorgeht.

Allgemeine Versuchsbeschreibung

Der Boden wurde durch zweimaliges Umgraben (von Hand) und Einebnen vorbereitet. Dann wurde die Reispflänzchen in einem solchen Abstand gesetzt, dass pro Pflänzchen eine Fläche von 25 x 25 cm zur Verfügung stand. Als Dünger wurden Harnstoff, Superphosphat und Kaliumchlorid in Mengen von 200, 100 und 90 kg/ha verwendet. Ein

Drittel des gesamten Stickstoff-Düngers wurde beim Verpflanzen und je ein Drittel 30 und 60 Tage nach dem Verpflanzen ausgebracht.

Die Verpflanzung des Reises erfolgte jeweils auf Flächen von 18 m Länge und 5 m Breite, die mit Erdwällen umgeben waren. Innerhalb dieser Anbauflächen wurden die einzelnen Versuchsflächen durch 70 cm breite Streifen von Zinkblech (oder Kunststoffplatten), die quer zur Längsrichtung in einem Abstand von 3 m etwa 30 cm in den Boden gerammt wurden, voneinander getrennt. Auf diese Weise entstanden voneinander getrennte Versuchsflächen von jeweils 15 $m^2$. Der Wasserstand betrug jeweils 3-5 cm. Die Versuche wurden in der Weise duchgeführt, dass jeweils neben jeder behandelten Versuchsfläche eine Versuchsfläche unbehandelt gelassen wurde um eine bessere Auswertung der Versuche zu ermöglichen.

Die Applikation der herbiziden Zusammensetzungen erfolgte mit Hilfe der Shaker Bottle Methode oder durch Sprühen mit einer üblichen Sprühvorrichtung.

Die Applikation der herbiziden Zusammensetzungen wurde jeweils 2-3 Tage nach dem Verpflanzen vorgenommen. Die Auswertung der Versuche erfolgte durch Vergleich der bei Versuchsende auf den behandelten Versuchsflächen vorhandenen Menge an Kulturpflanzen bzw. Unkräutern mit der auf der benachbarten unbehandelten Versuchsfläche vorhandenen Menge an Kulturpflanzen bzw. Unkräutern. Zu den nachfolgenden Beispielen wird die Differenz zwischen der bei Versuchsende auf der unbehandelten Versuchsfläche vorhandenen Menge an Kulturpflanzen und der auf der behandelten Versuchsfläche vorhandenen Menge an Kulturpflanzen in Prozent der bei Versuchsende auf der unbehandelten Versuchsfläche vorhandenen Menge an Kulturpflanzen als Phytotoxizität (=Grad der Schädigung der Kulturpflanze durch die herbizide Zusammensetzung) und entsprechend die Differenz zwischen der bei Versuchsende auf der unbehandelten Versuchsfläche vorhandenen Menge an Unkräutern und der auf der behandelten Versuchsfläche vorhandenen Menge an Unkräutern in Prozent der auf der unbehandelten Versuchsfläche vorhandenen Menge an Unkräutern als

herbizide Wirkung (=Grad der Schädigung der Unkräuter durch die herbizide Zusammensetzung) angegeben.

Beispiel 16:

Es wurde die herbizide Wirkung der Formulierungen A und B geprüft.

Zusammensetzung der Formulierungen (Gew. %)

| | Formulierung A | Formulierung B |
|---|---|---|
| Piperophos | 12,7 | 12,7 |
| 2,4-D-Butylester | 6,0 | 6,0 |
| Pentanol-1 | 10,0 | - |
| Oleylpolyglykoläther (15 EO) | 0,6 | 0,6 |
| Ricinusölpolyglykoläther (36-37 EO) | 0,9 | 0,9 |
| Dodecylbenzolsulfonsäure-Ca-Salz | 1,5 | 1,5 |
| Hochsiedende arom. KW-Fraktion (Shellsol A) | ad 100 | ad 100 |

Boden: lehmig

Reissorte: IR 36

Unkräuter: Monochoria vaginalis, Fimbristylis miliacea und Cyperus iria.

Die Versuchsergebnisse sind in der folgenden Tabelle zusammengefasst:

| Formulierung | Aufwandmenge (kg AS/ha) | Art der Applikation | Phytotoxizität | herbizide Wirkung | | |
|---|---|---|---|---|---|---|
| | | | | Monochoria vag. | Firmbristylis ssp. | Cyperus ssp |
| A | 0,75 | Shaker Bottle | 0 | 90 | 80 | 80 |
| A | 0,75 | Sprühen | 0 | 90 | 80 | 80 |
| B | 0,75 | Shaker Bottle | 0 | 75 | 70 | 70 |

Die Versuchsergebnisse zeigen, dass bei gleicher Aufwandmenge mit dem erfindungsgemässen Alkohol enthaltenden Formulierungen eine bessere herbizide Wirkung erzielt wird.

Beispiel 17

Es wurde die herbizide Wirkung der Formulierungen C und D gegen scirpus hotarui in verpflanztem Reis geprüft.

Zusammensetzung der Formulierungen (Gew. %)

| | Formulierung C | Formulierung D |
|---|---|---|
| Pretilachlor | 8,0 | 8,0 |
| Oxadiazon | 8,0 | 8,0 |
| Pentanol 1 | 10,0 | - |
| Oleylpolyglykoläther (15 EO) | 0,3 | 0,3 |
| Ricinusölpolyglykoläther (36-37 EO) | 0,4 | 0,4 |
| Dodecylbenzolsulfonsäure-Ca-Salz | 0,7 | 0,7 |
| Xylol | ad 100 | ad 100 |

Boden: Lehmboden mit 3,4 % Humus-Gehalt

Reissorte: Nihonbare

Aufwandmenge: 5 kg/ha (0,8 kg AS/ha)

Applikationsart: Shaker Bottle

| Formulierung | Phytotoxizität | herbizide Wirkung |
|---|---|---|
| C | 0 | 100 |
| D | 0 | 75 |

Beispiel 18:

Es wurde die herbizide Wirkung oder Formulierungen E und P in verpflanztem Reis geprüft.

Zusammensetzung der Formulierungen (Gew.%)

| | Formulierung E | Formulierung F |
|---|---|---|
| Pretilachlor | 12,0 | 12,0 |
| Pentanol 1 | 10,0 | - |
| Oleylpolyglykoläther (15 EO) | 0,6 | 0,6 |
| Ricinusölpolyglykoläther (36-37 EO) | 0,8 | 0,8 |
| Dodecylbenzolsulfonsäure-Ca-Salz | 1,4 | 1,4 |
| Hochsied. aliph. Benzinfraktion (Petrol Special 200) | ad 100 | ad 100 |

Boden: lehmig

Reissorte: Nihonbare

Applikationsart: Shaker Bottle und Sprühen

Unkräuter: Monochoria vaginalis, Scirpus hotarui, Fimbristylis miliacea und Cyperus iria

Die Versuchsergebnisse sind in folgender Tabelle zusammengefasst:

| Formulierung | Aufwandmenge kg AS/ha | Art der Applikation | Phytotoxizität | Herbizide Wirkung |
|---|---|---|---|---|
| E | 0,48 | Shaker Bottle | 8 | 92 |
| F | 0,48 | Shaker Bottle | | 85 |
| E | 0,48 | Sprühen | | 92 |

Patentansprüche

1. Herbizide Zusammensetzung in Form eines emulgierbaren Konzentrats, dadurch gekennzeichnet, dass es neben einer oder mehreren herbiziden Aktivsubstanzen, anionischen und nichtionischen Tensiden und einem mit Wasser nicht mischbaren Lösungsmittel einen oder mehrere Alkohole der Formel I

$$R - OH \qquad (I)$$

worin R $C_2$-$C_8$-Alkyl, $C_5$-$C_7$-Cycloalkyl, Cyclopropylmethyl, 1-Cyclopropyläthyl, Cyclohexylmethyl, 1-Cyclohexyläthyl, 2-Cyclohexyläthyl, Benzyl, 1-Phenyläthyl oder 2-Phenyläthyl bedeutet, enthält.

2. Herbizide Zusammensetzung nach Anspruch 1, dadurch gekennzeichnet, dass der Gehalt an einem oder mehreren Alkoholen der Formel I 2,5 - 25 Gew.% beträgt.

3. Herbizide Zusammensetzung nach Anspruch 1, dadurch gekennzeichnet, dass der Gehalt an einem oder mehreren Alkoholen der Formel I 3 - 10 Gew.% beträgt.

4. Herbizide Zusammensetzung nach Anspruch 1, dadurch gekennzeichnet, dass der Gehalt an einem oder mehreren Alkoholen der Formel I 5 - 10 Gew.% beträgt.

5. Herbizide Zusammensetzung nach Anspruch 1, gekennzeichnet durch einen Gehalt von
10 - 50 Gew.% Aktivsubstanz
3 - 20 Gew.% eines oder mehrere Alkohole der Formel I
0,3 - 10 Gew.% Tensid bzw. Tensidgemisch ad 100 Gew.% Lösungsmittel.

6. Herbizide Zusammensetzung nach Ansprüchen 1 und 4, dadurch gekennzeichnet, dass das Mengenverhältnis von Aktivsubstanz zu Alkohol der Formel I 1-20 : 1 beträgt.

7. Herbizide Zusammensetzung nach Anspruch 6 dadurch gekennzeichnet, dass das Mengenverhältnis von Aktivsubstanz zu Alkohol der Formel I 1 - 5 : 1 beträgt.

8. Herbizide Zusammensetzung nach Ansprüchen 1 und 4, dadurch gekennzeichnet, dass es als Alkohol der Formel I n-Butanol, Isobutanol, Amylalkohol (n-Pentanol), Isoamylalkohol, n-Hexanol, Cyclohexanol oder Benzylalkohol enthält.

9. Herbizide Zusammensetzung nach Ansprüchen 1 und 4, dadurch gekennzeichnet, dass es eine herbizide Wirksubstanz aus der Gruppe Diphenyläther, Benzoylpyrazolderivate, Halogenacetanilide, 1,3,5-Triazinderivate, Oxadiazolderivate, O,O-Dialkyl-S-piperidinocarbonylmethylthiophosphate oder Gemische solcher Herbizide enthält.

10. Herbizide Zusammensetzung nach Anspruch 9, dadurch gekennzeichnet, dass sie als Aktivsubstanz ein Herbizid aus der Gruppe Thiophencarb, Biphenox, Chlornitrophen, Chlormethoxynil, Pyrazolate, Pyrazoxyphen, Butachlor, Pretilachlor, Metolachlor, Dimethametryn, Oxadiazon, oder Gemische von Piperophos mit 2,4-D, Pretilachlor, Oxadiazon oder Dimethametryn enthält.

11. Herbizide Zusammensetzung nach Anspruch 10, dadurch gekennzeichnet, dass sie als herbiziden Wirkstoff Pretilachlor, Oxadiazon ein Gemisch von Piperophos mit 2,4-D oder Dimethametryn oder ein Gemisch von Pretilachlor mit Oxadiazon enthält.

12. Herbizide Zusammensetzung nach Ansprüchen 1 und 4, dadurch gekennzeichnet, dass sie ein Tensidgemisch bestehend aus einem anionischen und einem nichtionischen Tensid enthält.

13. Herbizide Zusammensetzung nach Anspruch 12, dadurch gekennzeichnet, dass sie als anionisches Tensid ein Alkarylsulfonat der Formel II

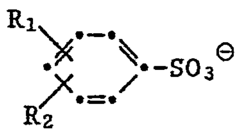 $B^{\oplus}$ (II)

in welcher $R_1$ $C_1$-$C_{12}$-Alkyl, $R_2$ Wasserstoff oder $C_1$-$C_{12}$-Alkyl und B ein Alkalimetall-, Erdalkalilmetall- oder Ammoniumkation oder das Kation eines primären, sekundären oder tertiären Amins bedeutet, enthält.

14. Herbizide Zusammensetzung nach Anspruch 12, dadurch gekennzeichnet, dass sie als anionisches Tensid einen mono- oder di-(Phenolpolyglykoläther)-phosphorsäureester oder ein Salz davon der Formel III

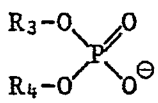 $M^{\oplus}$ (III)

in welcher $R_3$ einen Rest der Formel

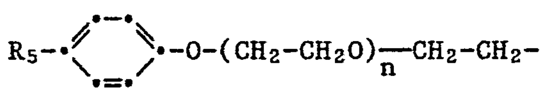

bedeutet, $R_4$ die gleiche Bedeutung hat wie $R_3$ oder für Wasserstoff steht und $M^{\oplus}$ ein Proton, ein Natrium-, Kalium-, Diäthylammonium-, Triäthylammonium-, Diäthanolammonium- oder Triäthanolammoniumkation bedeutet, wobei $R_5$ für $C_5$-$C_{12}$-Alkyl und n für 4 - 15 steht.

15. Herbizide Zusammensetzung nach Anspruch 12, dadurch gekennzeichnet, dass sie als nichtionisches Tensid einen Mono-, Di-oder Triglyceridpolyglykoläther der Formel IV

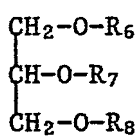 (IV)

in welcher $R_6$, $R_7$ und $R_8$ je unabhängig voneinander einen Polyglykolätherrest oder den Rest der Ricinolsäure bedeuten, der an der Hydroxygruppe ebenfalls durch einen Polyglykolätherrest substituiert

sein kann, wobei stets mindestens einer der Reste $R_6$, $R_7$ und $R_8$ den Rest der Ricinolsäure bedeutet und die Zahl der insgesamt vorhandenen Aethylenoxideinheiten (EO) 2 - 40 bedeutet.

16. Herbizide Zusammensetzung nach Anspruch 12, dadurch gekennzeichnet, dass sie als nichtionisches Tensid einen Mono-, Di-oder Triglyceridpolyglykoläther der Formel IV enthält, in welchem die Zahl der insgesamt vorhandenen Aethylenoxideinheiten 30 - 40 beträgt.

17. Herbizide Zusammensetzung nach Anspruch 12, dadurch gekennzeichnet, dass sie als nichtionisches Tensid der Formel IV äthoxyliertes Ricinusöl enthält.

18. Herbizide Zusammensetzung nach Anspruch 12, dadurch gekennzeichnet, dass sie als nichtionisches Tensid einen Aralkylphenolpolyglykoläther der Formel V

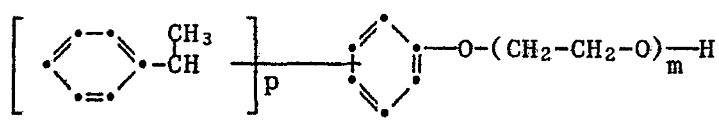

(V)

in welcher m 2 - 25 und p 1 - 3, enthält.

19. Herbizide Zusammensetzung nach Anspruch 18, dadurch gekennzeichnet, dass sie als nichtionisches Tensid einen Aralkylphenolpolyglykoläther der Formel V enthält, in welchem m 20 - 25 und p 3 bedeutet.

20. Herbizide Zusammensetzung nach Anspruch 12, dadurch gekennzeichnet, dass sie als nichtionisches Tensid einen Fettalkoholpolyglycoläther der Formel VI

$$R_{10}-O-(CH_2-CH_2-O)_q-H \qquad (VI)$$

in welcher $R_{10}$ $C_{10}$-$C_{20}$-Alkyl oder $C_{16}$-$C_{20}$-Alkenyl und q 2 - 20 bedeutet, enthält.

21. Herbizide Zusammensetzung nach Anspruch 20, dadurch gekennzeichnet, dass sie als nichtionisches Tensid einen Fettalkoholpolyglycoläther der Formel VI enthält, in welcher $R_{10}$ Lauryl, Cetyl, Stearyl oder Oleyl und q 14 - 16 bedeutet.

22. Herbizide Zusammensetzung nach Ansprüchen 1 und 4, dadurch gekennzeichnet, dass sie als Lösungsmittel einen aromatischen oder aliphatischen Kohlenwasserstoff oder ein cycloaliphatisches Keton enthält.

23. Herbizide Zusammensetzung nach Anspruch 22, dadurch gekennzeichnet, dass sie als Lösungsmittel Benzol, Toluol, Xylol, Chlorbenzol, n-Hexan, n-Heptan oder Cyclohexan enthält.

24. Verfahren zur Herstellung einer herbiziden Zusammensetzung gemäss Anspruch 1, dadurch gekennzeichnet, dass man die erforderliche Menge Lösungsmittel vorlegt, die Aktivsubstanz, die Tenside und den Alkohol einträgt und die Mischung bei Normaltemperatur oder leicht erhöhter Temperatur bis zur Homogenität rührt.

FO 7.5 GOT/bg*

Europäisches Patentamt

# EUROPÄISCHER RECHERCHENBERICHT

0206987

Nummer der Anmeldung

EP 86 81 0236

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | EP-A-0 099 029 (A. NATTERMAN) * Beispiel 5 * --- | 1-24 | A 01 N 25/02 |
| X | CA-A-1 049 805 (E.L. SMITH) * Beispiele 3,8,12 * --- | 1-24 | |
| X | CENTRAL PATENTS INDEX, BASIC ABSTRACTS JOURNAL, Section C: AGDOC, Woche B40, 28. November 1979, Nr. 73310, Derwent Publications Ltd., London, GB; & SU-A-641 950 (NORITSA N P) 08.08.1977 * Zusammenfassung * --- | 1-24 | |
| X | CHEMICAL ABSTRACTS, Band 78, Nr. 3, 22. Januar 1973, Seite 113, Nr. 12588w, Columbus, Ohio, US; A.A. TIMOFEEVA: "Concentrate of a 2,4-D emulsion in winter wheat plantings" & ZASHCH. RAST. (MOSCOW) 1972, 17(5), 27 * Zusammenfassung * --- | 1-24 | RECHERCHIERTE SACHGEBIETE (Int. Cl.4) |
| | | | A 01 N |
| A,D | DE-A-3 247 050 (BAYER) --- | | |
| A | FR-A-2 187 227 (PROCTER & GAMBLE) * Seite 7, Zeilen 17-23 * ----- | | |

Der vorliegende Recherchenbericht wurde für alle Patentansprüche erstellt.

| Recherchenort | Abschlußdatum der Recherche | Prüfer |
|---|---|---|
| DEN HAAG | 29-09-1986 | DECORTE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82